# EUROPÄISCHE PATENTSCHRIFT

(11) **EP 3 746 413 B1**
(45) Veröffentlichungstag und Bekanntmachung des Hinweises auf die Patenterteilung: **24.11.2021**
(21) Anmeldenummer: 19703026.5
(22) Anmeldetag: 25.01.2019
(51) Int. Cl.: C03B 18/14, C03B 23/24, E06B 3/66, E06B 3/663

(54) **VERFAHREN ZUR HERSTELLUNG EINER GLASSCHEIBE FÜR VAKUUM-ISOLIERGLAS**
METHOD FOR PRODUCING A GLASS SHEET FOR VACUUM INSULATING GLASS
PROCÉDÉ DE FABRICATION D'UNE VITRE POUR VITRAGE ISOLANT SOUS VIDE

(30) Priorität: 01.02.2018 DE 102018102233
(43) Veröffentlichungstag der Anmeldung: 09.12.2020
(73) Patentinhaber: arcon Flachglas-Veredlung GmbH & Co. KG, 91555 Feuchtwangen (DE)
(72) Erfinder: DEHNER, Hermann, 91564 Neuendettelsau (DE); SCHAUMBERGER, Franz, 4421 Aschach / Steyr (AT)
(74) Vertreter: Epping - Hermann - Fischer
(86) Internationale Anmeldenummer: PCT/EP2019/051882
(87) Internationale Veröffentlichungsnummer: WO 2019/149635

(56) Entgegenhaltungen:
- US-A- 4 683 154

## Beschreibung

Die vorliegende Anmeldung betrifft ein Verfahren zur Herstellung einer Glasscheibe. Die Glasscheibe, beispielsweise eine Floatglasscheibe, ist insbesondere als Halbzeug zur Weiterverarbeitung zu Vakuum-Isolierglas vorgesehen.

Diese Patentanmeldung beansprucht die Priorität der deutschen Patentanmeldung 10 2018 102 233.6.

Vakuum-Isolierglas (VIG) wird insbesondere als Wärmedämmverglasung eingesetzt, insbesondere bei Architekturverglasungen. Konventionelle Wärmedämmverglasungen weisen in der Regel ein Isolierglas aus zwei oder drei Glasscheiben auf, wobei der mindestens eine Scheibenzwischenraum durch ein Edelgas, wie beispielsweise Argon, befüllt sein kann. Vakuum-Isolierglas unterscheidet sich von solchen konventionellen Wärmeschutzverglasungen dadurch, dass der Scheibenzwischenraum evakuiert wird, eine Befüllung mit einem Edelgas erfolgt also nicht. Bei Vakuum-Isolierglas wird der Scheibenverbund am Rand gasdicht abgeschlossen, beispielsweise verlötet oder verschweißt. Auf diese Weise wird sichergestellt, dass das Vakuum im Scheibenzwischenraum über die Lebensdauer der Wärmedämmverglasung erhalten bleibt.

Vakuum-Isolierglas hat gegenüber herkömmlichen Wärmedämmverglasungen den Vorteil, dass die Wärmedämmung aufgrund des fehlenden Mediums im Scheibenzwischenraum noch wesentlich höher ist als bei einer Befüllung des Scheibenzwischenraums mit einem Edelgas. Ein Nachteil der Evakuierung des Scheibenzwischenraumes besteht allerdings darin, dass durch den äußeren Atmosphärendruck ein erheblicher Druck auf den Glasscheiben lastet. Dies macht es erforderlich, zwischen den Glasscheiben Stützkörper einzufügen, die in der Regel in einem regelmäßigen Raster zwischen den Gläsern angeordnet werden. Insbesondere bei großflächigen Scheiben kann das Aufbringen der Stützkörper, beispielsweise durch Aufkleben auf eine der Glasscheiben vor dem Verbinden der beiden Glasscheiben, aufwändig und kostenintensiv sein. In der Druckschrift US 4,683,154 A ist ein Verfahren beschrieben, bei dem Glaskugeln auf eine Scheibe aufgebracht werden, bei dem sich Tropfen aus geschmolzenem Glas während des freien Falls in nahezu perfekte Kugeln verfestigen sollen.

Eine zu lösende Aufgabe besteht somit darin, ein Verfahren zur Herstellung einer Glasscheibe, die als Halbzeug zur Weiterverarbeitung zu Vakuum-Isolierglas vorgesehen ist, anzugeben, bei dem die Stützkörper für den Scheibenzwischenraum auf besonders effiziente Weise aufgebracht werden.

Diese Aufgabe wird durch ein Verfahren zur Herstellung einer Glasscheibe für Vakuum-Isolierglas gemäß dem unabhängigen Patentanspruch 1 gelöst. Vorteilhafte Ausgestaltungen und Weiterbildungen der Erfindung sind Gegenstand der abhängigen Ansprüche.

Gemäß zumindest einer Ausführungsform des Verfahrens zur Herstellung der Glasscheibe wird eine Vielzahl von Stützkörpern auf die Glasscheibe aufgebracht. Die Stützkörper dienen im fertigen Vakuum-Isolierglas als Abstandshalter zwischen der Glasscheibe und einer zweiten Glasscheibe, um insbesondere trotz des äußeren Atmosphärendrucks einen vorgegebenen Scheibenzwischenraum aufrechtzuerhalten.

Bei dem hierin beschriebenen Verfahren erfolgt das Aufbringen der Stützkörper während der Herstellung der Glasscheibe in einem Floatglasverfahren. Ein Floatglasverfahren ist ein an sich bekanntes Verfahren zur Herstellung von Flachglas, bei dem eine flüssige Glasschmelze auf ein Bad aus flüssigem Zinn geleitet wird. Auf diesem Bad aus flüssigem Zinn schwimmt das Glas und breitet sich gleichmäßig aus, wobei durch die Oberflächenspannung des Zinns und des flüssigen Glases Glasscheiben mit sehr glatten Oberflächen ausgebildet werden. Das Glas wird typischerweise am kühleren Ende des Zinnbades kontinuierlich herausgezogen und durchläuft dann typischerweise einen Kühlofen, in dem es heruntergekühlt wird. Bei dem hierin beschriebenen Verfahren werden die Stützkörper vorteilhaft auf die Glasscheibe aufgebracht, bevor die Glasscheibe unter die Glasübergangstemperatur T_{g} abgekühlt ist, sodass die Stützkörper teilweise mit der Glasscheibe verschmelzen.

Das Aufbringen der Stützkörper ist bei dem Verfahren somit vorteilhaft in das Floatglasverfahren integriert. Dadurch, dass die Stützkörper auf einen Bereich der Glasscheibe aufgebracht werden, der eine Temperatur oberhalb der Glasübergangstemperatur T_{g} aufweist, und teilweise mit der Glasscheibe verschmelzen, ist es insbesondere nicht erforderlich, die Stützkörper auf andere Weise an der Glasscheibe zu befestigen, beispielsweise zu verkleben. Der Aufwand für das Aufbringen eines geeigneten Verbindungsmittels zum Befestigen der Stützkörper, beispielsweise eines Klebstoffs, entfällt deshalb. Dies ist besonders bei großflächigen Glasscheiben, die insbesondere als Wärmedämmverglasungen und/oder Sonnenschutzverglasungen eingesetzt werden, von Vorteil. Es ist insbesondere möglich, dass die Stützkörper aus einer geeigneten Zuführvorrichtung auf die Glasscheibe fallengelassen werden, bevor die Glasscheibe unter die Glasübergangstemperatur abgekühlt ist.

Gemäß einer Ausgestaltung werden die Stützkörper auf einen Bereich der Glasscheibe aufgebracht, der eine Temperatur von mindestens 600 °C aufweist. Bei einer derart hohen Temperatur ist die Glasscheibe insbesondere noch in einem zähflüssigen Zustand, sodass die Stützkörper, die vorzugsweise ebenfalls aus Glas bestehen, teilweise mit der Glasscheibe verschmelzen.

Gemäß zumindest einer Ausführungsform erfolgt das Aufbringen der Stützkörper auf die Glasscheibe, bevor die Glasscheibe in einen Kühlofen geführt wird. Das Herstellen der Glasscheibe erfolgt insbesondere durch einen Floatglasprozess, bei der das Glas zur Herstellung der Glasscheibe im geschmolzenen Zustand auf ein Bad aus flüssigem Zinn geleitet wird und die Glasscheibe anschließend in einen Kühlofen geführt wird. Dieser Vorgang ist an sich aus der konventionellen Herstellung von Flachglas bekannt. Das hierin beschriebene Verfahren macht sich die Idee zunutze, das Aufbringen der Stützkörper für das Vakuum-Isolierglas in das Floatglasverfahren zu integrieren, wobei die Stützkörper zu einem Zeitpunkt auf die Glasscheibe aufgebracht werden, an dem die Temperatur in dem Bereich, auf den die Stützkörper aufgebracht werden, noch nicht unter die Glasübergangstemperatur abgesunken ist. Dies kann insbesondere unmittelbar nach dem Verlassen des Bades aus flüssigem Zinn im Übergangsbereich zum Kühlofen erfolgen.

Gemäß einer vorteilhaften Ausführungsform bestehen die Stützkörper aus einem Glas. Die Stützkörper sind in diesem Fall vorteilhaft transparent und im fertigen Isolierglas wenig auffällig.

Gemäß einer vorteilhaften Ausführungsform sind die Stützkörper Glaskugeln. Es ist grundsätzlich denkbar, dass die Form der Stützkörper von einer Kugelform abweicht, wobei eine Kugelform aber vorteilhaft ist, wenn die Stützkörper aus einer geeigneten Zuführvorrichtung auf die noch nicht erstarrte Glasscheibe fallengelassen werden. Aufgrund der Kugelsymmetrie spielt es bei Glaskugeln vorteilhaft keine Rolle, in welcher Orientierung sie auf die Glasscheibe auftreffen.

Vorzugsweise weisen die Stützkörper, insbesondere Glaskugeln, vor dem Aufbringen auf die Glasscheibe Durchmesser im Bereich von 0,1 mm bis 1 mm auf. Durch eine geeignete Wahl der Durchmesser der Stützkörper kann ein gewünschter Scheibenabstand zwischen der Glasscheibe und einer zweiten Glasscheibe gezielt eingestellt werden.

Gemäß einer vorteilhaften Ausgestaltung wird die Glasscheibe beim Aufbringen der Stützkörper in einer Transportrichtung bewegt. Das Aufbringen der Stützkörper kann insbesondere erfolgen, während die Glasscheibe kontinuierlich auf dem Bad aus flüssigem Zinn gezogen wird. Vorzugsweise beträgt die Transportgeschwindigkeit in der Transportrichtung zwischen 1 m/min und 20 m/min.

Gemäß zumindest einer Ausführungsform werden die Stützkörper aus einer Zuführvorrichtung, die nicht in der Transportrichtung bewegt wird, auf die Glasscheibe fallengelassen. Ein Abstand d, in dem die Stützkörper in der Transportrichtung auf die Glasscheibe aufgebracht werden, ergibt sich in diesem Fall aus dem Quotienten aus der Transportgeschwindigkeit und dem Zeitintervall, in dem die Stützkörper auf die Glasscheibe fallengelassen werden. Vorzugsweise werden die Stützkörper mit einer festen Frequenz auf die Glasscheibe fallengelassen, um die Stützkörper in einem vorgegebenen Abstand d auf die Glasscheibe aufzubringen. Vorzugsweise beträgt der Abstand d in der Transportrichtung zwischen 10 mm und 50 mm.

Bei einer bevorzugten Ausgestaltung weist die Zuführvorrichtung für die Stützkörper in einer Richtung senkrecht zur Transportrichtung der Glasscheibe mehrere Auslassöffnungen auf, um mehrere Stützkörper gleichzeitig auf die Glasscheibe fallenzulassen. Vorzugsweise weisen die mehreren Auslassöffnungen einen festen Abstand b auf, sodass die Stützkörper in der Richtung quer zur Transportrichtung in einem festen Abstand b auf die Glasscheibe aufgebracht werden. Vorzugsweise beträgt der Abstand b senkrecht zur Transportrichtung zwischen 10 mm und 50 mm.

Alternativ zu einer Zuführvorrichtung mit mehreren Auslassöffnungen in der Richtung senkrecht zur Transportrichtung ist es auch möglich, mehrere Zuführvorrichtungen für die Stützkörper in der Richtung senkrecht zur Transportrichtung nebeneinander anzuordnen. In diesem Fall entspricht der Abstand der Auslassöffnungen der jeweiligen Zuführvorrichtungen dem Abstand b, in dem die Stützkörper in der Richtung senkrecht zur Transportrichtung auf die Glasscheibe aufgebracht werden.

Bei einer bevorzugten Ausgestaltung sind der Abstand d, in dem die Stützkörper in der Richtung parallel zur Transportrichtung auf die Glasscheibe aufgebracht werden, und der Abstand b, in dem die Stützkörper in der Richtung senkrecht zur Transportrichtung auf die Glasscheibe aufgebracht werden, im Wesentlichen gleich.

Die mit dem Verfahren herstellbare Glasscheibe wird insbesondere zu Vakuum-Isolierglas weiterverarbeitet. Gemäß einer Ausgestaltung des Verfahrens wird die Glasscheibe insbesondere mit einer zweiten Glasscheibe verbunden, wobei ein Zwischenraum zwischen der Glasscheibe und der zweiten Glasscheibe evakuiert wird. Die Stützkörper wirken vorteilhaft als Abstandshalter zwischen der Glasscheibe und der zweiten Glasscheibe.

Die Erfindung wird im Folgenden anhand von Ausführungsbeispielen im Zusammenhang mit den Figuren 1 bis 4 näher erläutert.

Es zeigen:
Figur 1 eine schematische Darstellung des Aufbringens der Stützkörper auf die Glasscheibe bei einem Beispiel des Verfahrens,
Figur 2 eine schematische Darstellung des Aufbringens der Stützkörper auf die Glasscheibe bei einem Beispiel des Verfahrens in einem Schnitt senkrecht zur Transportrichtung,
Figur 3 eine Draufsicht auf ein Beispiel der Glasscheibe nach dem Aufbringen der Stützkörper, und
Figur 4 eine schematische Darstellung eines Querschnitts durch ein Beispiel eines Vakuum-Isolierglases, das mit dem Verfahren herstellbar ist.

Gleiche oder gleich wirkende Elemente sind in den Figuren mit den gleichen Bezugszeichen versehen. Die Größen und die Größenverhältnisse der dargestellten Elemente sind nicht als maßstabsgerecht anzusehen.

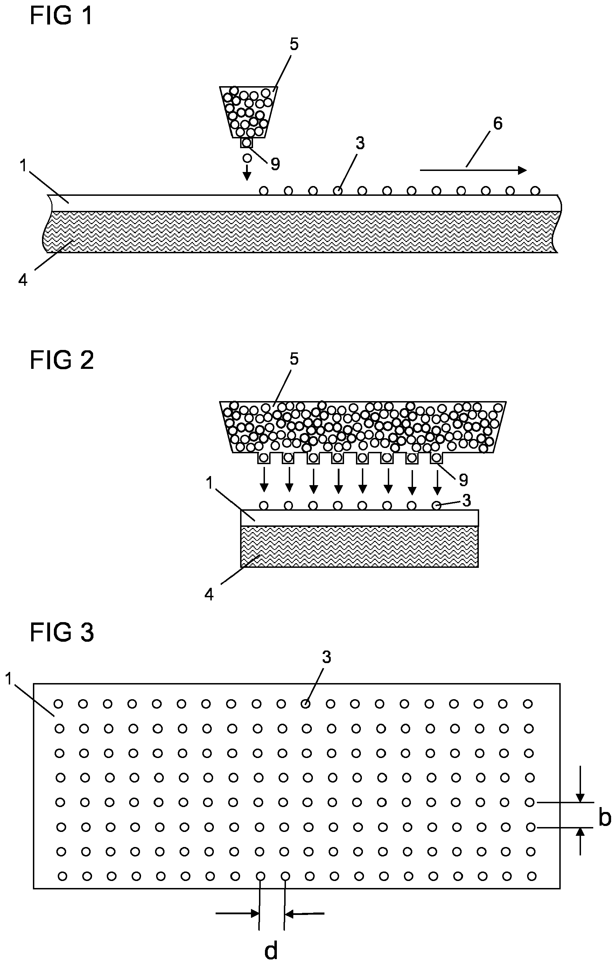

Die Figur 1 zeigt schematisch einen Schritt des Verfahrens, bei dem die Stützkörper 3 auf die Glasscheibe 1 aufgebracht werden. Die Glasscheibe 1 wird insbesondere in einem Floatglasverfahren hergestellt. Beispielsweise erfolgt das Herstellen der Glasscheibe 1 in einem kontinuierlichen Floatglasverfahren, bei dem Glas aus einer Schmelze an einem Ende eines Bads aus heißem Zinn 4 kontinuierlich zugeführt wird und die auf dem Bad aus heißem Zinn 4 erzeugte Glasscheibe in der Transportrichtung 6 kontinuierlich aus dem Bad herausgezogen und in einen Kühlofen geführt wird. Die Glasscheibe wird hierbei mit einer dazu geeigneten Transportvorrichtung in einer Transportrichtung 6 bewegt. Das Aufbringen der Stützkörper 3 kann insbesondere erfolgen, bevor die Glasscheibe 1 zum Abkühlen in den Kühlofen transportiert wird. Die Glasscheibe 1 befindet sich während des Aufbringens der Stützkörper 3 vorzugsweise noch vor dem Kühlofen, insbesondere noch auf oder unmittelbar nach dem Bad aus heißem Zinn 4.

Die Stützkörper 3 bestehen vorzugsweise aus einem Glas. Bei den Stützkörpern 3 handelt es sich insbesondere um Glaskugeln, die bevorzugt einen Durchmesser zwischen 0,1 mm und 1 mm aufweisen. Stützkörper 3, die aus einem Glas bestehen, haben den Vorteil, dass sie transparent sind. Weiterhin sind die Stützkörper 3 bei Durchmessern von nur 0,1 mm bis 1 mm im Vakuum-Isolierglas nicht auffällig.

Bei dem dargestellten Ausführungsbeispiel des Verfahrens werden die Stützkörper 3 aus einer Zuführvorrichtung 5 auf die Glasscheibe 1 fallengelassen, bevor die Glasscheibe 1 in den Kühlofen geführt wird. Die Glasscheibe 1 weist während des Aufbringens der Stützkörper 3 noch eine Temperatur oberhalb der Glasübergangstemperatur T_{g} des verwendeten Glases auf. Die Glasübergangstemperatur T_{g} kann beispielsweise etwa 550 °C betragen. Vorzugsweise weist die Glasscheibe beim Aufbringen der Stützkörper eine Temperatur von mehr als 600 °C auf. Bei einer derart hohen Temperatur ist die Glasscheibe 1 noch zähflüssig, sodass die aufgebrachten Stützkörper 3 teilweise mit der Glasscheibe 1 verschmelzen und auf diese Weise auf der Glasscheibe 1 befestigt werden. Insbesondere sind die Stützkörper 3 nach dem Abkühlen der Glasscheibe 1 fest mit der Glasscheibe 1 verbunden.

Die Zuführvorrichtung 5 weist mindestens eine Auslassöffnung 9 auf, aus der die Stützkörper 3 vorzugsweise mit einer festen Frequenz auf die Glasscheibe 1 fallengelassen werden. Auf diese Weise wird erreicht, dass die Stützkörper 3 in der Transportrichtung 6 in einem vorgegebenen Rasterabstand auf die Glasscheibe 1 aufgebracht werden, der gleich dem Quotienten aus der Transportgeschwindigkeit und dem Zeitintervall ist, mit dem die Stützkörper 3 auf die Glasscheibe 1 fallengelassen werden.

In Figur 2 ist rein schematisch ein Schnitt in der Richtung senkrecht zur Transportrichtung 6 dargestellt. Die Transportrichtung 6 ist also senkrecht zur Zeichenebene. Um die Stützkörper 3 in einer zweidimensionalen Gitteranordnung auf die Glasscheibe 1 aufzubringen, kann die Zuführvorrichtung 5 in der Richtung senkrecht zur Transportrichtung 6 eine Vielzahl von Auslassöffnungen 9 aufweisen, die in einem vorgegebenen Abstand angeordnet sind. Die Stützkörper 3 können auf diese Weise in einer Reihe senkrecht zur Transportrichtung über die gesamte Scheibenbreite gleichzeitig aufgebracht werden. Alternativ wäre es auch möglich, eine Vielzahl von separaten Zuführvorrichtungen 5 in der Richtung senkrecht zur Transportrichtung in einem vorgegebenen Rasterabstand nebeneinander anzuordnen.

Figur 3 zeigt schematisch eine Draufsicht auf die Glasscheibe 1, die mit dem hierin beschriebenen Verfahren hergestellt werden kann. Die Glasscheibe weist eine Rasteranordnung von Stützkörpern 3 auf. Die Stützkörper 3 sind nach der Herstellung mit dem beschriebenen Verfahren fest mit der Glasscheibe 1 verbunden, da sie teilweise mit der Glasscheibe 1 verschmelzen. Die Stützkörper 3 sind in der Längsrichtung der Glasscheibe 1, die insbesondere der Transportrichtung beim Floatglasverfahren entsprechen kann, vorzugsweise in einem festen Rasterabstand d angeordnet, wobei d beispielsweise im Bereich von 10 mm bis 50 mm liegt. In der Querrichtung der Glasscheibe 1 sind die Stützkörper 3 vorteilhaft in einem festen Rasterabstand b angeordnet, der insbesondere gleich dem Abstand der Auslassöffnungen 9 der Zuführvorrichtung 5 für die Stützkörper 3 sein kann. Bevorzugt liegt der Rasterabstand b in der Querrichtung der Glasscheibe 1 im Bereich von 10 mm bis 50 mm. Die Rasterabstände in der Längsrichtung und der Querrichtung sind bevorzugt im Wesentlichen gleich, das heißt es gilt d = b.

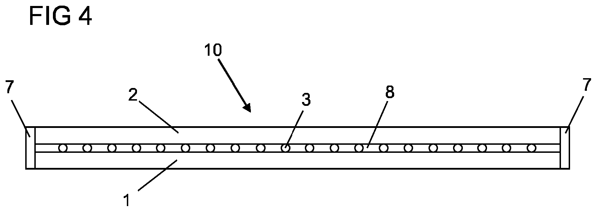

In Figur 4 ist schematisch ein Querschnitt durch ein Vakuum-Isolierglas 10 dargestellt, das mit dem hierin beschriebenen Verfahren herstellbar ist. Zur Fertigstellung des Vakuum-Isolierglases 10 ist die Glasscheibe 1, auf die die Stützkörper 3 mit dem beschriebenen Verfahren aufgebracht wurden, mit einer zweiten Glasscheibe 2 verbunden worden.

Es ist möglich, dass zumindest eine der Glasscheiben 1, 2 mit einer Beschichtung, insbesondere einer wärmereflektierenden Beschichtung, versehen wird.

Die Glasscheiben 1, 2 sind mit einer Randabdichtung 7 versehen worden, welche den Scheibenzwischenraum 8 gasdicht abschließt. Die Randabdichtung 7 kann insbesondere aus einem Metall, einer Metalllegierung, einem Lötglas oder einem organischen Dichtstoff bestehen. Der Scheibenzwischenraum 8 wird bei dem Vakuum-Isolierglas evakuiert. Hierzu kann beispielsweise ein Ventil (nicht dargestellt) im Bereich der Randabdichtung 7 vorgesehen sein. Die Verwendung von Stützkörpern 3 aus Glas, insbesondere von Glaskugeln, hat den Vorteil, dass die Stützkörper 3 im fertigen Vakuum-Isolierglas 10 aufgrund ihrer Transparenz weniger auffällig sind als bei der Verwendung von Stützelementen aus nicht transparenten Materialien wie zum Beispiel Metallen. Weiterhin ist das Vakuum-Isolierglas 10 besonders kosteneffizient herstellbar, da die Stützkörper 3 durch das Aufbringen auf das noch zähflüssige Glas der Glasscheibe 1 durch teilweises Verschmelzen an der Glasscheibe 1 befestigt werden, ohne dass in einem separaten Verfahrensschritt ein Verbindungsmittel wie zum Beispiel eine Klebstoffschicht aufgebracht werden muss. Das Verfahren ist besonders vorteilhaft zur Herstellung von großflächigen Scheiben wie zum Beispiel Sonnenschutz- oder Wärmedämmverglasungen im Architekturbereich.

Die Erfindung ist nicht durch die Beschreibung anhand der Ausführungsbeispiele beschränkt.

## Patentansprüche

1. Verfahren zur Herstellung einer Glasscheibe (1) für Vakuum-Isolierglas (10), bei dem eine Vielzahl von Stützkörpern (3) auf die Glasscheibe (1) aufgebracht werden, wobei
- das Aufbringen der Stützkörper (3) bei der Herstellung der Glasscheibe (1) in einem Floatglasverfahren erfolgt, und
- die Stützkörper (3) aufgebracht werden, während die Glasscheibe (1) eine Temperatur oberhalb der Glasübergangstemperatur T_{g} aufweist, so dass die Stützkörper (3) teilweise mit der Glasscheibe (1) verschmelzen.

2. Verfahren nach Anspruch 1,
wobei die Glasscheibe (1) beim Aufbringen der Stützkörper (3) eine Temperatur von mindestens 600 °C aufweist.

3. Verfahren nach einem der vorhergehenden Ansprüche, wobei die Stützkörper (3) auf die Glasscheibe aufgebracht (1) werden, bevor die Glasscheibe (1) in einen Kühlofen geführt wird.

4. Verfahren nach einem der vorhergehenden Ansprüche, wobei die Stützkörper (3) aus einem Glas bestehen.

5. Verfahren nach einem der vorhergehenden Ansprüche, wobei die Stützkörper (3) Glaskugeln sind.

6. Verfahren nach einem der vorhergehenden Ansprüche, wobei die Stützkörper (3) Durchmesser im Bereich von 0,1 mm bis 1 mm aufweisen.

7. Verfahren nach einem der vorhergehenden Ansprüche, wobei die Stützkörper (3) Abstände im Bereich von 10 mm bis 50 mm aufweisen.

8. Verfahren nach einem der vorhergehenden Ansprüche, wobei die Glasscheibe (1) beim Aufbringen der Stützkörper (3) in einer Transportrichtung (6) bewegt wird.

9. Verfahren nach Anspruch 8,
wobei die Transportgeschwindigkeit in der Transportrichtung (6) zwischen 1 m/min und 20 m/min beträgt.

10. Verfahren nach Anspruch 8 oder 9,
wobei die Stützkörper (3) aus mindestens einer Zuführvorrichtung (5), die nicht in der Transportrichtung (6) bewegt wird, auf die Glasscheibe (1) fallengelassen werden.

11. Verfahren nach Anspruch 10,
wobei die Zuführvorrichtung (5) in einer Richtung senkrecht zur Transportrichtung (6) mehrere Auslassöffnungen aufweist, um mehrere Stützkörper (3) gleichzeitig auf die Glasscheibe (1) fallenzulassen.

12. Verfahren nach Anspruch 10,
wobei in einer Richtung senkrecht zur Transportrichtung (6) mehrere Zuführvorrichtungen (5) nebeneinander angeordnet sind.

13. Verfahren nach einem der vorhergehenden Ansprüche, bei dem die Glasscheibe (1) und eine zweite Glasscheibe (2) miteinander verbunden werden und ein Vakuum im Zwischenraum (8) zwischen der Glasscheibe (1) und der zweiten Glasscheibe (2) erzeugt wird, und wobei das Aufbringen der Stützkörper (3) vor dem Verbinden der Glasscheibe (1) mit der zweiten Glasscheibe (2) erfolgt.

## Claims

1. A method for producing a glass sheet (1) for vacuum insulating glass (10), in which a plurality of supporting bodies (3) are applied to the glass sheet (1), wherein
- the application of the supporting bodies (3) is carried out in a float glass process during the production of the glass sheet (1), and
- the supporting bodies (3) are applied while the glass sheet (1) has a temperature above the glass transition temperature Tg, so that the supporting bodies (3) partially fuse with the glass sheet (1).

2. The method according to claim 1,
wherein the glass sheet (1) has a temperature of at least 600°C when the supporting bodies (3) are applied.

3. The method according to any of the preceding claims, wherein the supporting bodies (3) are applied (1) to the glass sheet before the glass sheet (1) is fed into a lehr.

4. The method according to any of the preceding claims, wherein the supporting bodies (3) consist of a glass.

5. The method according to any of the preceding claims, wherein the supporting bodies (3) are glass spheres.

6. The method according to any of the preceding claims, wherein the supporting bodies (3) have diameters in the range from 0.1 mm to 1 mm.

7. The method according to any of the preceding claims,
wherein the support bodies (3) have spacings in the range from 10 mm to 50 mm.

8. The method according to any of the preceding claims, wherein the glass sheet (1) is moved in a transport direction (6) when the supporting bodies (3) are applied.

9. The method according to claim 8,
wherein the transport speed in the transport direction (6) is between 1 m/min and 20 m/min.

10. The method according to claim 8 or 9,
wherein the supporting bodies (3) are dropped onto the glass sheet (1) from at least one feeding device (5) which is not moved in the transport direction (6).

11. The method according to claim 10,
wherein the feeding device (5) has a plurality of outlet openings in a direction perpendicular to the conveying direction (6) for dropping a plurality of supporting bodies (3) onto the glass sheet (1) simultaneously.

12. The method according to claim 10,
wherein several feeding devices (5) are arranged next to each other in a direction perpendicular to the transport direction (6) .

13. The method according to any of the preceding claims,
in which the glass sheet (1) and a second glass sheet (2) are joined together and a vacuum is generated in the space (8) between the glass sheet (1) and the second glass sheet (2), and wherein the application of the supporting bodies (3) takes place before the glass sheet (1) is joined to the second glass sheet (2).

## Revendications

1. Un procédé de fabrication d'une vitre (1) pour un vitrage isolant sous vide (10), dans lequel une multitude de corps de support (3) sont appliqués sur la vitre (1), dans lequel
- les corps de support (3) sont appliqués pendant la fabrication de la vitre (1) dans un procédé de verre flotté, et
- les corps de support (3) sont appliqués pendant que la vitre (1) a une température supérieure à la température de transition vitreuse Tg, de telle sorte que les corps de support (3) fusionnent partiellement avec la vitre (1).

2. Le procédé selon la revendication 1,
dans lequel la feuille de verre (1) a une température d'au moins 600 °C lorsque les corps de support (3) sont appliqués.

3. Le procédé selon l'une des revendications précédentes, dans lequel les corps de support (3) sont appliqués sur la vitre (1) avant que la vitre (1) ne soit introduite dans un lehr.

4. Le procédé selon l'une quelconque des revendications précédentes,
dans lequel les corps de support (3) sont constitués d'un verre.

5. Le procédé selon l'une quelconque des revendications précédentes,
dans lequel les corps de support (3) sont des sphères de verre.

6. Le procédé selon l'une quelconque des revendications précédentes,
dans lequel les corps de support (3) ont des diamètres dans la gamme de 0, 1 mm à 1 mm.

7. Le procédé selon l'une quelconque des revendications précédentes,
dans lequel les corps de support (3) ont des espacements dans la gamme de 10 mm à 50 mm.

8. Le procédé selon l'une quelconque des revendications précédentes,
dans lequel la vitre (1) est transportée dans une direction de transport (6) lors de l'application des corps de support (3) .

9. Le procédé selon la revendication 8,
dans lequel la vitesse de transport dans la direction de transport (6) est comprise entre 1 m/min et 20 m/min.

10. Le procédé selon la revendication 8 ou 9,
dans lequel les corps de support (3) sont déposés sur la vitre (1) par au moins un dispositif d'alimentation (5) qui n'est pas transporté dans la direction de transport (6).

11. Le procédé selon la revendication 10,
dans lequel le dispositif d'alimentation (5) a une pluralité d'ouvertures de sortie dans une direction perpendiculaire à la direction de transport (6) pour laisser tomber une pluralité de corps de support (3) simultanément sur la vitre (1) .

12. Le procédé selon la revendication 10,
dans lequel une pluralité de dispositifs d'alimentation (5) sont disposés côte à côte dans une direction perpendiculaire à la direction de transport (6).

13. Le procédé selon l'une des revendications précédentes, dans lequel la vitre (1) et une seconde vitre (2) sont jointes ensemble et un vide est créé dans l'espace (8) entre la vitre (1) et la seconde vitre (2), et dans lequel l'application des corps de support (3) a lieu avant que la vitre (1) soit jointe à la seconde vitre (2).
